# EUROPEAN PATENT SPECIFICATION

(11) **EP 1 278 338 B1**
(45) Date of publication and mention of the grant of the patent: **06.07.2005**
(21) Application number: 02001714.1
(22) Date of filing: 24.01.2002
(51) Int. Cl.: H04L 12/28, G05B 19/04, H04L 29/06

(54) **System and method for controlling home appliances**
System und Verfahren zur Steuerung von Heimgeräten
Système et procédé de contrôle d' appareils domestiques

(30) Priority: 20.07.2001 KR 2001043714
(43) Date of publication of application: 22.01.2003
(73) Proprietor: LG Electronics Inc., Seoul 150-010 (KR)
(72) Inventor: Yoon, Sang Chul, Ilsan-ku, Koyang-si, Kyungki-do 411-410 (KR); Jeon, Duck Goo, Sungdong-ku, Seoul 133-070 (KR)
(74) Representative: TER MEER STEINMEISTER & PARTNER GbR

(56) References cited:
- EP-A- 1 085 728
- EP-A- 1 217 475
- WO-A-00/04427
- WO-A-01/29658
- WO-A-01/31852
- FR-A- 2 770 017
- DESBONNET J ET AL: "SYSTEM ARCHITECTURE AND IMPLEMENTATION OF A CEBUS/INTERNET GATEWAY" IEEE TRANSACTIONS ON CONSUMER ELECTRONICS, IEEE INC. NEW YORK, US, vol. 43, no. 4, 1 November 1997 (1997-11-01), pages 1057-1062, XP000768558 ISSN: 0098-3063

## Description

### BACKGROUND OF THE INVENTION

### Field of the Invention

The present invention relates to a system and method for controlling home appliances, and more particularly to a system and method for controlling a plurality of home appliances installed in a building through the Internet.

### Description of the Related Art

A home appliance networking system has recently been highlighted in which a plurality of home appliances are interconnected via an internal network of a home and the internal network is connected to an external Internet network, thereby enabling a user to control the home appliances from anywhere inside and outside of the home.

In the home appliance networking system, particularly, the user can not only recognize state information of a specific home appliance at any place inside of the home, but also control the specific home appliance using control means, such as a computer, at any place outside of the home. In this regard, the home appliance networking system has obtained favorable responses from many consumers, and thus has become more widespread in its application day by day.

However, the above-mentioned home appliance networking system has a disadvantage in that a local area network (LAN) must be constructed in the home or building to interconnect the home appliances via the internal network of the home and integratedly control the interconnected appliances, resulting in a great cost being incurred.

Further, in order to connect the home appliances to the internal network of the home and transmit and receive control and state information between the home appliances and the internal network, a high-price LAN card and a communication processable central processing unit (CPU) of the personal computer (PC) class must be installed in each of the home appliances.

However, it is the current reality that the installation of the LAN cards and PC-class CPUs in the respective home appliances raises manufacturing costs of the respective appliances, causing a reduction in their competitiveness on markets. Moreover, new production lines are required to install PC-class CPUs and LAN cards of new models in the home appliances. As a result, costs required for construction of the new production lines raise the prices of the home appliances still more.

Furthermore, the installation of the LAN cards and PC-class CPUs in the respective home appliances increases the costs of certain ones of the appliances not requiring the control through the internal network, and in turn results in wasting of resources.

The EP 1 217 475 A2 discloses an apparatus and a method for remotely controlling household appliances, wherein the household appliances are connected to a home network based on a power line and a network processor is installed in each of the household appliances, thereby enabling a household appliance user to remotely control the appliances from a place outside of his or her home as well as inside thereof. The communication is based on the power line, so expensive insulation transformers are required. The EP 1 217 475 A2 was published on the 26.06.2002.

The WO 00/04427 describes a method and an apparatus for monitoring and controlling electrical appliances. A home appliances controller is communicating with a server via the internet. A microprocessor is arranged for controlling and monitoring said home appliance, whereas the status and control information of the appliance will be provided. The microprocessor is adapted to communicate with said server via the internet, wherein the server includes a homepage displaying status information and enabling control of the appliance through a controller or microprocessor.

The WO 01/31852 discloses a fully integrated web activated control and monitoring device. The Web enabled microcontroller is embedded in a domestic hardware. A web server is embedded into a home appliance. Integrated software for remotely controlling hardware by means of the microcontroller device combines control application code and HTTP server code. One implementation of the microcontroller device has a microprocessor coupled to a physical communications unit, a ROM and a RAM. A protocol stack associated with the HTTP server may be permanently coded into the ROM or loaded into the RAM as required.

The WO 01/29658 concerns a user interface for a bidirectional communication system providing a flexibility in configuring home entertainment communication functions and in allocating Internet domains names to manage and access elements and peripherals of a home entertainment system, i.e. VCR, DVD, PC, Printer and home appliances that are operated in a domestic intranet.

The EP 1 085 728 A2 descnbes a communication terminal apparatus for data communication between network and computers and data communication method using it. A computer terminal apparatus is serving to allocate the corresponding private addresses to the computers having requested the connection with the network.

The FR 2 770 017 A1 concerns a Control system for central control of several domestic appliances using respective HTML page data. HTML is employed to provide a common system by which each appliance can be controlled, with configuration data displayed within HTML pages. The control device for a system of household appliances uses a set of HTML pages or fractions of pages associated with each appliance, the information being contained within the pages being used to control the appliance. The control system includes a unit for loading and processing the specifications associated with each appliance, and a display for showing the pages or fractions of pages of HTML code.

### SUMMARY OF THE INVENTION

Therefore, the present invention has been made in view of the above problems. It is an object of the present invention to provide a system and method for controlling home appliances enabling a reliably and economically control of the appliances without using costly hardware components.

In accordance with one aspect of the present invention, the above and other objects can be accomplished by the provision of a home appliance control system comprising a plurality of home appliances installed in a building; an internal network installed inside of the building and coupled to the plurality of home appliances and to an external Internet network installed outside of the building; the internal network is connected to the external Internet network via network equipment; whereas network equipment comprises a gateway and a hub; a communication module for receiving/transmitting information received and transmitted between the external Internet network and the home appliances; a computing device connected to said internal network; wherein said computing device is connected between the network equipment and the at least one communication module, said computing device is setting respective private Internet protocol (IP) addresses of said home appliances such that said home appliances are connected to said internal Internet network on the basis of the set private IP addresses; said computing device has a public IP address enabling access from said external internet network; and each home appliance includes a communication module having a data storage unit for storing the set private IP address of said corresponding home appliance; and an interface storage unit for storing a user interface program appropriate to a control and state observation of said corresponding home appliance having said private IP addresses stored in said data storage unit; and a data processor for converting/processing data transmitted and received between said internal network and said corresponding home appliance appropriately to standards of said internal network and a main controller of said corresponding home appliance; wherein said user interface program stored in said interface storage unit is configured to be sent to said computing device such that a user controls said corresponding home appliance through said computing device.

In accordance with another aspect of the present invention, there is provided a method for controlling home appliances, which are connected to an internal network of a building; wherein the internal network is coupled to an external Internet network via a networking equipment; the internal network is connected to a plurality of home appliances, the method comprising the steps of: a) installing a communication module in the internal network, b) installing a computing device within the building, wherein a-1) installing a communication module in each of the home appliances, respectively, b-1) installing the computing device between the networking equipment and the communication modules; b-2) setting private IP addresses for each of said home appliances respectively by the computing device, whereas said computing device having a public IP address; b-3) storing said set private IP addresses of a corresponding one of said home appliances in said communication modules respectively; and b-4) storing a user interface program in each of said communication modules in a user interface memory included in the communication modules; b-5) processing data transmitted and received between an internal Internet network and said corresponding home appliance appropriately to standards of said internal network and said corresponding home appliance by each of said communication modules; and c) controlling each of said home appliances with the set private IP addresses through said user interface program appropriate to the appliance control; and d) if a user desires to gain access to a specific one of said home appliances to control it, determining whether the user has a code valid to control the specific home appliance; whereby said step c) is performed only when said user has the valid code; e) connecting said home appliances to said internal network if the private IP addresses of said home appliances are set at step b-2); and f) determining whether each of said home appliances has been connected to said internal network.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a block diagram showing the construction of a home appliance control system in accordance with the present invention;
Fig. 2 is a detailed block diagram of a communication module in Fig. 1;
Fig. 3 is a block diagram illustrating in detail connections of components in Fig. 1; and
Fig. 4 is a flow chart illustrating a method for controlling home appliances in accordance with the present invention.

### DESCRIPTION OF THE PREFERRED EMBODIMENTS

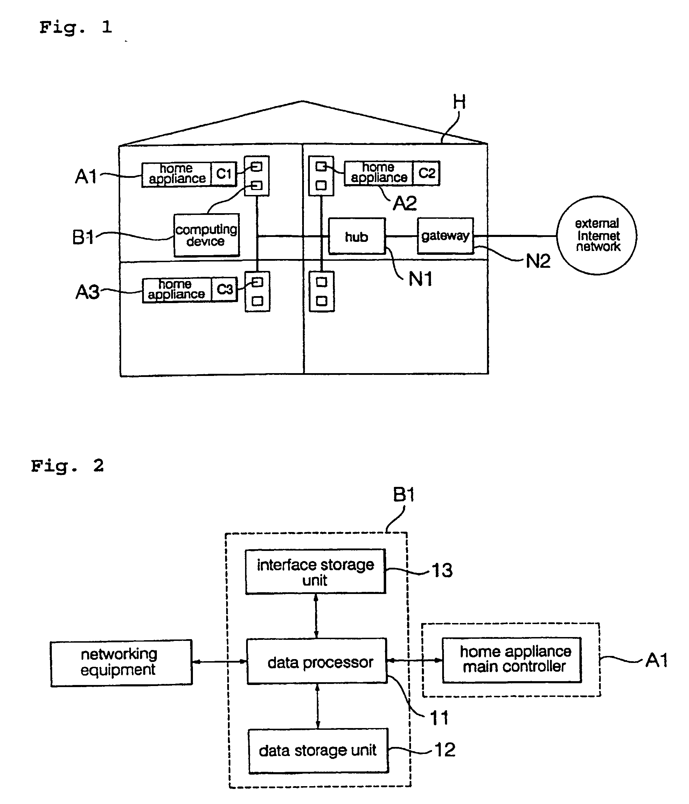

With reference to Fig. 1, there is shown in block form the construction of a home appliance control system in accordance with the present invention. As shown in this drawing, the home appliance control system comprises a plurality of home appliances A1, A2 and A3 installed to be connectable to an internal Internet network equipped with a LAN line installed previously in a home or building H, and a computing device B1 for setting respective private Internet protocol (IP) addresses of the home appliances A1, A2 and A3 and sending respective control information to the home appliances A1, A2 and A3. The computing device B1 may preferably be a PC. A plurality of communication modules C1, C2 and C3 are installed respectively in the home appliances A1, A2 and A3 to store the set private IP addresses of the corresponding appliances and process information transmitted and received between the corresponding appliances and the internal Internet network.

As seen from Fig. 1, the internal Internet network constructed in the home or building H is connected to an external Internet network via a hub N1, which is networking equipment, and a gateway N2 such that a user, when being outside of the home or building H, can gain access to the computing device B1 through the external Internet network to control the home appliances A1, A2 and A3.

The computing device B1 has a public IP address, which enables the user to access the computing device B1 when he/she is outside of the home or building H. The computing device B1 is preferably a PC. Alternatively, the computing device B1 may be a gateway or router. In order to control the home appliances, the user or operator can enter control information to the computing device B1 directly. Alternatively, the user or operator may gain access to the computing device B1 through the external Internet network to enter the control information to the computing device B1 indirectly.

Before receiving the control information that the operator has entered directly/indirectly to control the plurality of home appliances A1, A2 and A3, the computing device B1 checks an operator identification (ID) and password entered by the operator to determine whether the operator is a person authorized to control the home appliances. The computing device B1 is adapted to prestore information about an ID and password of a valid operator in the PC. Where the ID and password entered by the operator are the same as the prestored information, the computing device B1 sends the control information entered by the operator to the respective home appliances so as to control them.

If necessary, the computing device B1 can assign respective port numbers to the home appliances A1, A2 and A3, as well as the respective private IP addresses. As a result, the plurality of home appliances A1, A2 and A3 can be controlled under the condition that one private IP address is enabled, or control information sent over the Internet can be transferred to a specific one of the home appliances A1, A2 and A3, having the same port number as well as the same private IP address, so that the sent control information can be prevented from being mistransferred or the appliances can be prevented from being controlled with erroneous control information.

The communication modules C1, C2 and C3 are installed respectively in the home appliances A1, A2 and A3. Each of the communication modules C1, C2 and C3 includes, as shown in Fig. 2, a data processor 11 for converting/processing information transmitted and received between the networking equipment and a main controller in a corresponding one of the home appliances A1, A2 and A3 appropriately to standards of the networking equipment and main controller, a data storage unit 12 for storing a private IP address and port number assigned to the corresponding home appliance as a result of the processing by the data processor 11, and an interface storage unit 13 for storing a user interface appropriate to a control and state observation of the corresponding home appliance having the private IP address stored in the data storage unit 12.

In the preferred embodiment of the present invention, the computing device B1 can simply be implemented by, in a typical PC, installing a program functioning to assign respective private IP addresses and port numbers to the home appliances. Further, each of the communication modules C1, C2 and C3 can be implemented by appending the data storage unit 12, which stores a private IP address and port number assigned by the computing device B1, to the structure of a typical communication module for a communication function of a home appliance in a field to which the present invention is applied.

The data processor 11 is adapted to process control information sent over the Internet in such a manner that it compares a private IP address and port number contained in the sent control information with the set private IP address and port number of the corresponding home appliance stored in the data storage unit 12 and transfers the sent control information to the corresponding home appliance only when it is determined to be valid as a result of the comparison.

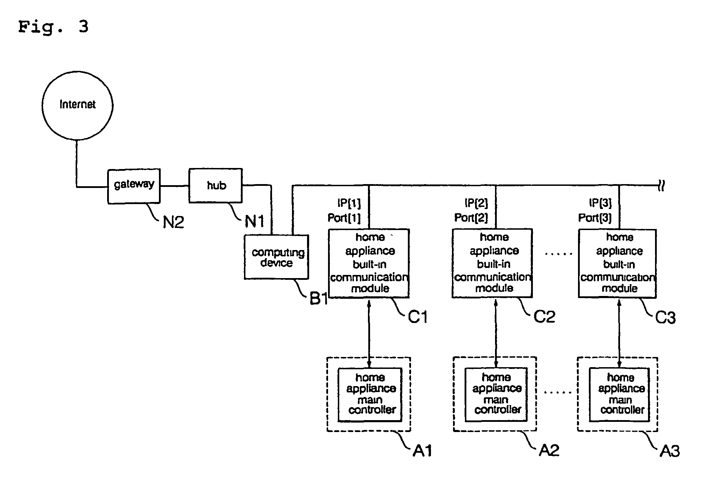

Fig. 3 shows connections of the computing device and home appliances installed in the building according to the present invention.

Referring to Fig. 3, the computing device B1 is connected to the external Internet network via the hub N1 and gateway N2. The computing device B1 has a public IP address so that it can act as a server on the external Internet network. The home appliance user or operator can gain access to the computing device B1 via the external Internet network.

The computing device B1 is also connected to the communication modules C1, C2 and C3 in the plurality of home appliances A1, A2 and A3 installed in the building through the LAN line installed previously in the building, such that respective control information are transferred to the communication modules C1, C2 and C3 through the computing device B1 so as to control the respective home appliances A1, A2 and A3.

The home appliances A1, A2 and A3 are assigned their unique private IP addresses and port numbers from the computing device B1, which are then stored in the corresponding communication modules C1, C2 and C3, respectively. As a result, each of the home appliances A1, A2 and A3 is controlled on the basis of control information only when the control information has the private IP address and port number stored in the corresponding communication module C1, C2 or C3.

The interface storage unit 13 provided in each of the communication modules C1, C2 and C3 stores a user interface appropriate to the control of a home appliance equipped with the corresponding communication module. Therefore, a program or Java script constituting a user interface of a specific home appliance is executable in the computing device or external Internet network so that the home appliance can be controlled according to the user interface through the computing device or external Internet network.

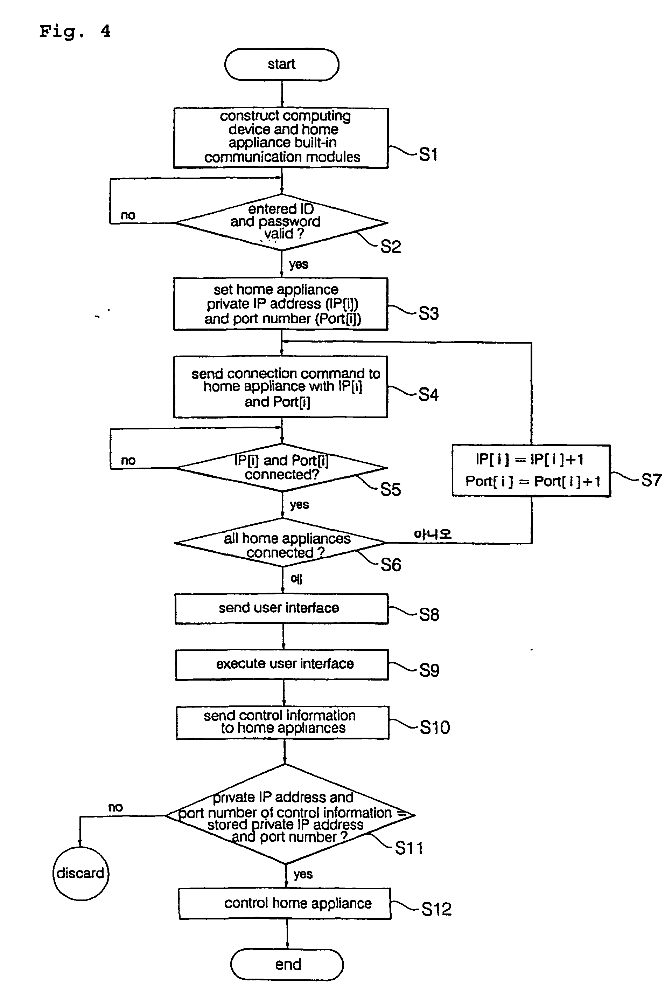

A detailed description will hereinafter be given of the operation of the home appliance control system with the above-stated construction in accordance with the present invention with reference to Fig. 4.

Fig. 4 is a flow chart illustrating a method for controlling home appliances in accordance with the present invention. First, at the first step S1, the computing device and communication modules are constructed to be interoperable with the home appliances installed in the building.

At the second step S2, the computing device checks an ID and password entered directly by the home appliance operator or indirectly over the external Internet network on the basis of the public IP address, to determine whether the operator is a person authorized to control the home appliances.

At the third step S3, if it is determined at the second step S2 that the operator is the person authorized to control the home appliances, the computing device assigns private IP addresses and port numbers to the plurality of home appliances, respectively. The communication modules in the home appliances store the assigned private IP addresses and port numbers in the data storage units, respectively. Alternatively, the computing device may store the assigned private IP addresses and port numbers by home appliances to send information to the home appliances. In this case, the computing device can dually check the assigned private IP addresses and port numbers such that the information can accurately be sent to the home appliances, respectively.

At the fourth step S4, the computing device sends a connection command to a specific home appliance with a private IP address i and port number i such that the specific home appliance is controllable through the Internet.

At the fifth step S5, the computing device determines whether the specific home appliance has been connected to the Internet in response to the connection command.

At the sixth step S6, after determining at the fifth step S5 that the specific home appliance has been connected to the Internet, the computing device determines whether all the home appliances have been connected to the Internet. On the other hand, upon determining at the fifth step S5 that the specific home appliance has not been connected to the Internet, the computing device continuously determines whether the specific home appliance has been connected to the Internet.

At the seventh step S7, if it is determined at the sixth step S6 that all of the home appliances have not been connected to the Internet, the computing device increments the private IP address i and port number i by ones, respectively, and then returns to the fourth step S4. Consequently, the computing device sends the connection command to a home appliance having a private IP address i+1 and port number i+1.

At the eighth step S8, if the plurality of home appliances installed in the building are connected to the Internet on the basis of the assigned private IP addresses and port numbers, then each of the communication modules in the home appliances sends a user interface appropriate to a control and state observation of the corresponding home appliance from the data storage unit to the computing device. Provided that the home appliance operator has entered the ID and password to the computing device indirectly through the external Internet network, the communication module sends the user interface to the operator over the Internet. As a result, the user interface is sent to an external PC or Internet connection means in the external Internet network that the operator utilizes to enter the ID and password to the computing device.

At the ninth step S9, the user interface sent at the eighth step S8 is executed in the computing device.

At the tenth step S10, home appliance control information generated according to the user interface executed at the ninth step S9 is sent to a corresponding one of the plurality of home appliances installed in the building.

At the eleventh step S11, the corresponding home appliance receives the control information sent at the above control information sending step through the associated communication module and then determines whether a private IP address and port number contained in the received control information are the same as the private IP address and port number stored in the data storage unit.

At the twelfth step S12, if it is determined at the eleventh step S11 that the private IP address and port number of the received control information are the same as the stored private IP address and port number, the corresponding home appliance is controlled on the basis of the control information. On the contrary, in the case where it is determined at the eleventh step S11 that the private IP address and port number of the received control information are not the same as the stored private IP address and port number, the corresponding home appliance discards the received control information.

As apparent from the above description, the present invention provides a system and method for controlling a plurality of home appliances installed in a building, wherein a computing device is provided to set respective private IP addresses of the home appliances to connect the appliances to an internal Internet network equipped with a LAN line installed previously in the building, and communication modules are provided to store the set private IP addresses and convert/process information transmitted and received between the home appliances and the internet network appropriately to standards of the appliances and Internet network. An integrated network control process can be performed with respect to the home appliances with no use of high-price LAN cards or CPUs by simply installing the communication modules in the existing appliance constructions. Further, an integrated home appliance/network control system can be constructed at a reduced cost to simply control the plurality of home appliances.

## Claims

1. A home appliance control system comprising:
- a plurality of home appliances (A1, A2. A3) installed in a building (H);
- an internal network installed inside of the building (H) and coupled to the plurality of home appliances (A1, A2. A3) and to an external Internet network installed outside of the building (H);
- the internal network is connected to the external Internet network via network equipment (N1. N2); whereas network equipment (N1, N2) comprises a gateway (N2) and a,hub (N1);
- a communication module (C1, C2, C3) for receiving/transmitting information received and transmitted between the external Internet network and the home appliances (A1, A2, A3);
- a computing device (B1) connected to said internal network;
**characterized in that**
- said computing device (B1) is connected between the network equipment (N1, N2) and the at least one communication module (C1, C2, C3),
- said computing device (B1) is setting respective private Internet protocol (IP) addresses of said home appliances such that said home appliances (A1, A2, A3) are connected to said internal Internet network on the basis of the set private IP addresses;
- said computing device (B1) has a public IP address enabling access from said external internet network; and
- each home appliance (A1, A2, A3) includes a communication module (C1 C2, C3) having a data storage unit (12) for storing the set private IP address of said corresponding home appliance; and an interface storage unit (13) for storing a user interface program appropriate to a control and state observation of said corresponding home appliance having said private IP addresses stored in said data storage unit (12); and a data processor (11) for converting/processing data transmitted and received between said internal network and said corresponding home appliance (A1, A2. A3) appropriately to standards of said internal network and a main controller of said corresponding home appliance (A1, A2. A3);
- wherein said user interface program stored in said interface storage unit (13) is configured to be sent to said computing device (B1) such that a user controls said corresponding home appliance (A1, A2, A3) through said computing device (B1).

2. The home appliance control system as set forth in claim 1, wherein the computing device (B1) is setting private IP addresses and Port numbers to the home appliances (A1, A2, A3).

3. The home appliance control system as set forth in claim 1, wherein said user interface program stored in said interface storage unit (13) includes a Java program executable in said computing device (B1).

4. The home appliance control system as set forth in claim 1, wherein said user interface program stored in said interface storage unit (13) includes a Java program executable in a personal computer of the user when said user gains access to said computing device (B1) through said external Internet network.

5. A method for controlling home appliances (A1, A2. A3), which are connected to an internal network of a building (H); wherein the internal network is coupled to an external Internet network via a networking equipment (N1, N2): the internal network is connected to a plurality of home appliances (A1, A2. A3), the method comprising the steps of:
a) installing a communication module (C1, C2, C3) in internal network.
b) installing a computing device (B1) within the building (H),
**characterized in that**
a-1) installing a communication module (C1, C2, C3) in each of the home appliances (A1, A2, A3), respectively,
b-1) installing the computing device (B1) between the networking equipment (N1, N2) and the communication modules (C1, C2. C3);
b-2) setting private IP addresses for each of said home appliances (A1, A2, A3) respectively by the computing device (B1), whereas said computing device (B1) having a public IP address;
b-3) storing said set private IP addresses of a corresponding one of said home appliances (A1, A2, A3) in said communication modules (C1, C2. C3) respectively; and
b-4) storing a user interface program in each of said communication modules (C1, C2. C3) in a user interface memory included in the communication modules (C1, C2, C3);
b-5) processing data transmitted and received between an internal Internet network and said corresponding home appliance appropriately to standards of said internal network and said corresponding home appliance by each of said communication modules (C1, C2. C3); and
c) controlling each of said home appliances (A1, A2, A3) with the set private IP addresses through said user interface program appropriate to the appliance control; and
d) if a user desires to gain access to a specific one of said home appliances to control it, determining whether the user has a code valid to control the specific home appliance; whereby said step c) is performed only when said user has the valid code;
e) connecting said home appliances to said internal network if the private IP addresses of said home appliances are set at step b-2); and
f) determining whether each of said home appliances has been connected to said internal network.

6. The method as set forth in claim 5, wherein said step c) includes the steps of:
c-1) sending said stored user interface program to a user desiring the appliance control such that it is executed by the user.

7. The method as claimed in claim 5, wherein said step c) further includes the steps of:
c-2) determining whether a private IP address contained in home appliance control information inputted through said user interface is the same as the set private IP address of each of said home appliances;
c-3) transferring a user's control command inputted through said user interface program to a specific one of said home appliances if the private IP address of said control information is the same as the set private IP address of the specific home appliance; and
c-4) controlling only said specific home appliance in response to the transferred control command.

## Patentansprüche

1. Ein Heimgeräte-Steuersystem umfassend:
- eine Vielzahl von Heimgeräten (A1, A2, A3), die in einem Gebäude (H) installiert sind;
- ein innerhalb des Gebäudes (H) installiertes internes Netzwerk, das an die Vielzahl der Heimgeräte (A1, A2, A3) und an ein externes Internetnetzwerk gekoppelt ist, welches außerhalb des Gebäudes (H) installiert ist;
- das interne Netzwerk ist mit dem externen Internetnetzwerk über Netzwerkequipment (N1, N2) verbunden, wobei das Netzwerkequipment (N1, N2) ein Gateway (N2) und einen Hub (N1) umfasst;
- ein Kommunikationsmodul (C1, C2, C3) zum Empfangen/Übertragen von Informationen, die zwischen dem externen Internetnetzwerk und den Heimgeräten (A1, A2, A3) empfangen und übertragen werden;
- eine mit dem internen Netzwerk verbundene Recheneinheit (B1);
**dadurch gekennzeichnet, dass**
- die Recheneinheit (B1) zwischen dem Netzwerkequipment (N1, N2) und dem wenigstens einen Kommunikationsmodul (C1, C2, C3) angeschlossen ist,
- die Recheneinheit (B1) stellt entsprechende private Internetprotokoll-Adressen (IP) der Heimgeräte ein, sodass die Heimgeräte (A1, A2, A3) mit dem internen Internetnetzwerk auf der Basis der eingestellten privaten IP-Adressen verbunden sind;
- die Recheneinheit (B1) weist eine öffentliche IP-Adresse auf, die einen Zugriff vom externen Internetnetzwerk ermöglicht; und
- jedes Heimgerät (A1, A2, A3) umfasst: ein Kommunikationsmodul (C1, C2, C3) mit einer Datenspeichereinheit (12) zur Speicherung der eingestellten privaten IP-Adresse des entsprechenden Heimgerätes; und eine Interface-Speichereinheit (13) zur Speicherung eines Benutzer-Interface-Programms, das für eine Steuerung und Zustandsüberwachung der entsprechenden Heimgeräte mit den in der Datenspeichereinheit (12) gespeicherten privaten IP-Adressen geeignet ist; und einen Datenprozessor (11) zur Umwandlung/Verarbeitung von Daten, die zwischen dem internen Netzwerk und dem entsprechenden Heimgerät (A1, A2, A3) nach den Standards des internen Netzwerks übertragen und empfangen wurden; und einen Hauptcontroller des entsprechenden Heimgerätes (A1, A2, A3);
- wobei das in der Interface-Speichereinheit (13) gespeicherte Benutzer-Interface-Programm, so konfiguriert ist, dass es zu der Recheneinheit (B1) gesendet werden kann, sodass ein Benutzer das entsprechende Heimgerät (A1, A2, A3) mittels der Recheneinheit (B1) steuert.

2. Heimgeräte-Steuersystem gemäß Anspruch 1, wobei die Recheneinheit (B1) private IP-Adressen und Portnummern der Heimgeräte (A1, A2, A3) setzt.

3. Heimgeräte-Steuersystem gemäß Anspruch 1, wobei das in der Interface-Speichereinheit (13) gespeicherte Benutzer-Interface-Programm ein Java-Programm umfasst, das in der Recheneinheit (B1) ausführbar ist.

4. Heimgeräte-Steuersystem gemäß Anspruch 1, wobei das in der Interface-Speichereinheit (13) gespeicherte Benutzer-Interface-Programm ein Java-Programm umfasst, dass in einem Personalcomputer des Benutzers ausführbar ist, wenn der Benutzer Zugang zur Recheneinheit (B1) über das externe Internetnetzwerk erhält.

5. Verfahren zur Steuerung von Heimgeräten (A1, A2, A3), die an ein internes Netzwerk in einem Gebäude (H) angeschlossen sind, wobei das interne Netzwerk mit einem externen Internetnetzwerk über Netzwerkequipment (N1, N2) gekoppelt ist; das interne Netzwerk ist an eine Vielzahl von Heimgeräten (A1, A2, A3) gekoppelt, das Verfahren umfasst die Schritte:
a) Installieren eines Kommunikationsmoduls (C1, C2, C3) im internen Netzwerk,
b) Installieren einer Recheneinheit (B1) innerhalb des Gebäudes (H), **gekennzeichnet, durch**
a-1) Installieren eines Kommunikationsmoduls (C1, C2, C3) in jedem der Heimgeräte (A1, A2, A3) entsprechend,
b-1) Installieren der Recheneinheit (B1) zwischen dem Netzwerkequipment (N1, N2) und den Kommunikationsmodulen (C1, C2, C3);
b-2) Setzen von privaten IP-Adressen für jedes der entsprechenden Heimgeräte (A1, A2, A3) **durch** die Recheneinheit (B1), wobei die Recheneinheit (B1) eine öffentliche IP-Adresse aufweist;
b-3) Speichern der gesetzten privaten IP-Adressen eines entsprechenden Heimgerätes (A1, A2, A3) in den entsprechenden Kommunikationsmodulen (C1, C2, C3); und
b-4) Speichern eines Benutzer-Interface-Programms in jedem der Kommunikationsmodule (C1, C2, C3) in einem Benutzer-Interface-Speicher, der in den Kommunikationsmodulen (C1, C2, C3) enthalten ist;
b-5) Verarbeiten von Daten, die zwischen einem internen Internetnetzwerk und dem entsprechenden Heimgerät nach Standards des internen Netzwerks und des entsprechenden Heimgerätes **durch** jedes der Kommunikationsmodule (C1, C2, C3) übertragen und empfangen werden; und
c) Steuern jedes Heimgerätes (A1, A2, A3) mit den gesetzten privaten IP-Adressen **durch** das Benutzer-Interface-Programm entsprechend der Gerätesteuerung; und
d) wenn ein Benutzer vesucht. Zugang zu einem spezifischen Heimgerät zu bekommen, um es zu steuern, ermitteln, ob der Benutzer über einen gültigen Code zur Steuerung des speziellen Heimgerätes verfügt, wobei Schritt c) nur durchgeführt wird, wenn der Benutzer einen gültigen Code hat;
e) Verbinden der Heimgeräte mit dem internen Netzwerk, wenn die privaten IP-Adressen der Heimgeräte in Schritt b-2) gesetzt sind; und
f) Bestimmen, ob jedes der Heimgeräte mit dem internen Netzwerk verbunden ist.

6. Verfahren nach Anspruch 5, wobei in Schritt c) der Schritt enthalten ist:
c-1) Senden des gespeicherten Benutzer-Interface-Programms zu einem Benutzer, der das Heimgerät steuern möchte, sodass es von dem Benutzer ausgeführt werden kann.

7. Verfahren nach Anspruch 5, wobei in Schritt c) weiter die Schritte enthalten sind:
c-2) Bestimmen, ob eine private IP-Adresse in einer Heimgeräte-Steuerinformation enthalten ist, die durch das Benutzer-Interface eingegeben ist, mit einer gesetzten private IP-Adresse von jedem der Heimgeräte übereinstimmt;
c-3) Übertragen eines durch das Benutzer-Interface-Programm eingegebenen Steuerbefehls des Benutzers zu einem Spezifischen der Heimgeräte, wenn die private IP-Adresse der Steuerinformation die gleiche ist, wie die gesetzte private IP-Adresse des speziellen Heimgerätes; und
c-4) Steuern nur des speziellen Heimgerätes in Abhängigkeit des übertragenen Steuerbefehls.

## Revendications

1. Système domotique de commande d'appareils domestiques comprenant :
- une pluralité d'appareils domestiques (A1, A2, A3) installés dans un bâtiment (H) ;
- un réseau interne installé à l'intérieur du bâtiment (H) et couplé à la pluralité d'appareils domestiques (A1, A2, A3) et à un réseau Internet externe installé à l'extérieur du bâtiment (H) ;
- le réseau interne est relié au réseau Internet externe via un équipement réseau (N1, N2); tandis que l'équipement réseau (N1, N2) comprend une passerelle (N2) et un concentrateur *(hub)* (N1);
- un module de communication (C1, C2, C3) destiné à recevoir/transmettre des informations reçues et transmises entre le réseau Internet externe et les appareils domestiques (A1, A2, A3) ;
- un dispositif de calcul (B1) relié audit réseau interne;
**caractérisé en ce que**
- ledit dispositif de calcul (B1) est relié entre l'équipement réseau (N1, N2) et le au moins un module de communication (C1, C2, C3),
- ledit dispositif de calcul (B1) définit les adresses de protocole Internet privées respectives (IP) desdits appareils domestiques de telle sorte que lesdits appareils domestiques (A1, A2, A3) soient reliés audit réseau Internet interne sur la base des adresses IP privées définies ;
- ledit dispositif de calcul (B1) possède une adresse IP publique permettant un accès depuis ledit réseau Internet externe ; et
- chaque appareil domestique (A1, A2, A3) comprend un module de communication (C1, C2, C3) possédant une unité de stockage de données (12) destinée à stocker l'adresse IP privée définie dudit appareil domestique correspondant ; et une unité de stockage d'interface (13) destinée à stocker un programme d'interface utilisateur permettant de contrôler et d'observer l'état dudit appareil domestique correspondant possédant lesdites adresses IP privées stockées dans ladite unité de stockage de données (12) ; et un processeur de données (11) destiné à convertir/traiter les données transmises et reçues entre ledit réseau interne et ledit appareil domestique correspondant (A1, A2, A3) de manière appropriée conformément aux normes dudit réseau interne et d'un contrôleur principal dudit appareil domestique correspondant (A1, A2, A3) ;
dans lequel ledit programme d'interface utilisateur stocké dans ladite unité de stockage d'interface (13) est configuré pour être envoyé audit dispositif de calcul (B1) de telle sorte qu'un utilisateur contrôle ledit appareil domestique correspondant (A1, A2, A3) à l'aide dudit dispositif de calcul (B1).

2. Système de commande d'appareils domestiques selon la revendication 1, dans lequel le dispositif de calcul (B1) définit les adresses IP privées et les numéros de port des appareils domestiques (A1, A2, A3).

3. Système de commande d'appareils domestiques selon la revendication 1, dans lequel ledit programme d'interface utilisateur stocké dans ladite unité de stockage d'interface (13) comprend un programme Java exécutable dans ledit dispositif de calcul (B1).

4. Système de commande d'appareils domestiques selon la revendication 1, dans lequel ledit programme d'interface utilisateur stocké dans ladite unité de stockage d'interface (13) comprend un programme Java exécutable sur un PC de l'utilisateur lorsque ledit utilisateur a accès audit dispositif de calcul (B1) par le biais dudit réseau Internet externe.

5. Procédé de commande d'appareils domestiques (A1, A2, A3), qui sont reliés à un réseau interne d'un bâtiment (H); dans lequel le réseau interne est couplé à un réseau Internet externe via un équipement de mise en réseau (N1, N2); le réseau interne est relié à une pluralité d'appareils domestiques (A1, A2, A3), le procédé comprenant les étapes consistant à :
a) installer un module de communication (C1, C2, C3) dans le réseau interne,
b) installer un dispositif de calcul (B1) dans le bâtiment (H),
**caractérisé par**
a-1) l'installation d'un module de communication (C1, C2, C3) dans chacun des appareils domestiques (A1, A2, A3), respectivement,
b-1) l'installation du dispositif de calcul (B1) entre l'équipement de mise en réseau (N1, N2) et les modules de communication (C1, C2, C3) ;
b-2) la définition des adresses IP privées de chacun desdits appareils domestiques (A1, A2, A3) respectivement par le dispositif de calcul (B1), tandis que ledit dispositif de calcul (B1) possède une adresse IP publique ;
b-3) le stockage desdites adresses IP privées définies de l'un desdits appareils domestiques correspondants (A1, A2, A3) dans lesdits modules de communication (C1, C2, C3) respectivement ; et
b-4) le stockage d'un programme d'interface utilisateur dans chacun desdits modules de communication (C1, C2, C3) dans une mémoire d'interface utilisateur incluse dans les modules de communication (C1, C2, C3) ;
b-5) le traitement des données transmises et reçues entre un réseau Internet interne et ledit appareil domestique correspondant, de manière appropriée, conformément aux normes dudit réseau interne et dudit appareil domestique correspondant par chacun desdits modules de communication (C1, C2, C3); et
c) le contrôle de chacun desdits appareils domestiques (A1, A2, A3) avec les adresses IP privées définies à l'aide dudit programme d'interface utilisateur convenant pour la commande des appareils ; et
d) si un utilisateur souhaite accéder à l'un desdits appareils domestiques spécifiques afin de le contrôler, la détermination du fait que l'utilisateur possède ou non un code valide pour contrôler l'appareil domestique spécifique; moyennant quoi ladite étape c) est effectuée uniquement lorsque ledit utilisateur possède le code valide ;
e) le raccordement desdits appareils domestiques audit réseau interne si les adresses IP privées desdits appareils domestiques sont définies à l'étape b-2) ; et
f) la détermination du fait que chacun desdits appareils domestiques ait été relié ou non audit réseau interne.

6. Procédé selon la revendication 5, dans lequel ladite étape c) comprend les étapes consistant à :
c-1) envoyer ledit programme d'interface utilisateur stocké à un utilisateur souhaitant contrôler l'appareil domestique, de telle sotte qu'il soit exécuté par l'utilisateur.

7. Procédé selon la revendication 5, dans lequel ladite étape c) comprend en outre les étapes consistant à ;
c-2) déterminer si une adresse IP privée contenue dans les informations de commande de l'appareil domestique transmises par le biais de ladite interface utilisateur est la même ou non que l'adresse IP privée définie pour chacun desdits appareils domestiques ;
c-3) transférer une commande de contrôle d'utilisateur saisie par le biais dudit programme d'interface utilisateur à l'un desdits appareils domestiques spécifiques si l'adresse IP privée desdites informations de commande est la même que l'adresse IP privée définie de l'appareil domestique spécifique ; et
c-4) contrôler uniquement ledit appareil domestique spécifique en réponse à la commande de contrôle transférée.
